# EUROPÄISCHE PATENTSCHRIFT

(11) **EP 3 026 595 B1**
(45) Veröffentlichungstag und Bekanntmachung des Hinweises auf die Patenterteilung: **22.01.2020**
(21) Anmeldenummer: 14195349.7
(22) Anmeldetag: 28.11.2014
(51) Int. Cl.: G06K 7/00

(54) **Kartenleseranordnung**
Card reader assembly
Système de lecteur de cartes

(43) Veröffentlichungstag der Anmeldung: 01.06.2016
(73) Patentinhaber: ddm hopt + schuler GmbH & Co. KG., 78628 Rottweil (DE)
(72) Erfinder: Hopf Karl-Rudolf, 78628 Rottweil (DE)
(74) Vertreter: Kohler Schmid Möbus Patentanwälte

(56) Entgegenhaltungen:
- DE-A1-102010 030 733
- DE-B3-102009 026 466

## Beschreibung

Die vorliegende Erfindung betrifft einen Kartenleser aufweisend ein Kunststoffgehäuse mit einem Boden, eine im Boden angeordnete, zumindest teilweise mit Kunststoff umspritzte Kontaktiereinheit zum Datenaustausch mit einer in den Kartenleser eingeführten Chipkarte, wobei die Kontaktiereinheit in die Kartenbahn hineinragende Kontakte zum Kontaktieren von elektrischen Kontaktfeldern der Chipkarte aufweist, und ein der Kontaktiereinheit auf der gleichen Seite wie die Kontakte in Karteneinführrichtung vorgeordnetes Entladungsblech mit zwei Anschlussfüßen zum Auflöten auf eine Leiterplatte.

Ein derartiger Kartenleser ist beispielsweise durch die DE 10 2010 030 733 A1 bekannt geworden.

Im normalen Gebrauch können Chipkarten elektrostatisch aufgeladen sein, wobei hier Spannungen bis zu 20 KV auftreten können. Wird nun eine solche elektrostatisch aufgeladene Karte in den Kartenleser eingeführt, so kann es durch die Spannung zur Zerstörung der Elektronik der Kontaktiereinheit oder der Chipkarte selbst kommen. Um solche Zerstörungen zu verhindern, ist es aus der DE 10 2010 030 733 A1 bekannt, in Karteneinführrichtung vor den Kontakten der Kontaktiereinheit ein an ein Referenzpotential (z.B. Masse) anschließbares Entladungsblech anzuordnen, das auf der gleichen Seite wie die Kontakte der Kontaktiereinheit in die Kartenbahn zum Kontaktieren der einen Chipkartenseite hineinragt. Beim Einführen einer elektrostatisch aufgeladenen Chipkarte in den Kartenleser kann die Spannung über das Entladungsblech abfließen, noch bevor die Chipkarte von den Kontakten der Kontaktiereinheit kontaktiert wird.

Kartenleser werden auf Leiterplatten montiert, wobei Anschlussfüße der Kontaktiereinheit mit der Leiterplatte verlötet werden. Dabei muss verhindert werden, dass zu Manipulationszwecken der Kartenleser von der Leiterplatte angehoben oder gelöst wird, um z.B. gegen einen manipulierten Kartenleser ausgetauscht zu werden.

Es ist daher die Aufgabe der vorliegenden Erfindung, bei einem Kartenleser der eingangs genannten Art solche Manipulationen zu erschweren oder zu verhindern.

Diese Aufgabe wird erfindungsgemäß dadurch gelöst, dass das Entladungsblech im Boden angeordnet und zumindest teilweise mit Kunststoff umspritzt ist.

Erfindungsgemäß ist das Entladungsblech ein Einlegeteil, das beim Kunststoffspritzen des Kunststoffgehäuses mit Kunststoff umspritzt ist. Durch Anlöten der Anschlussfüße des Entladungsblechs auf eine Leiterplatte ist der Kartenleser an der Leiterplatte nicht nur im hinteren Bereich mittels der angelöteten Kontakte der Kontaktiereinheit und ggf. eines Kartenendschalters, sondern auch im Bereich der Einführöffnung befestigt und gegen Anheben gesichert.

Vorzugsweise erstreckt sich das Entladungsblech parallel zur Kartenbahn und quer zur Karteneinführrichtung, und zwar vorteilhafterweise gegenüber der Oberseite des Bodens zurückversetzt oder bündig mit der Oberseite des Bodens.

Für eine optimale Entladungswirkung ist das Entladungsblech auf seiner der Kartenbahn zugewandten Seite zumindest in dem in Karteneinführrichtung vor den Kontakten liegenden Bereich frei von Kunststoff, so dass beim Vorbeiführen einer elektrostatisch aufgeladenen Chipkarte Spannung von der Chipkarte über den blanken Blechbereich abfließen kann.

Vorzugsweise ist der Kartenleser auf einer Leiterplatte montiert, wobei der Boden des Kartenlesergehäuses der Leiterplatte zugewandt ist, und das auf die Leiterplatte aufgelötete Entladungsblech in einem geschlossenen Stromkreis einer Überwachungselektronik angeordnet. Das Entladungsblech bildet somit einen Abhebeschalter (Anti Removal Switch) der Überwachungselektronik. Wird zu Manipulationszwecken der Kartenleser von der Leiterplatte angehoben oder gelöst, um z.B. gegen einen manipulierten Kartenleser ausgetauscht zu werden, muss zuvor das Entladungsblech von der Leiterplatte abgelötet werden. Dadurch wird der Stromkreis der Überwachungselektronik unterbrochen, also der Abhebeschalter geöffnet, was von der Überwachungselektronik detektiert wird, die dann keinen Lesevorgang mehr zulässt bzw. die Kontaktiereinheit außer Funktion setzt. Das Entladungsblech kann zwar durch Kurzschließen oder Überbrücken angegriffen werden, aber dies ist auf jeden Fall mit einem größeren Aufwand verbunden und ergibt somit eine größere Punktzahl bei der PCI (Payment Card Industry)-Zulassung.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fign. 1a, 1b: eine perspektivische Ansicht der Unterseite (Fig. 1a) und der Oberseite (Fig. 1b) eines aus einem Gehäuseunterteil und einem Gehäusedeckel zusammengesetzten erfindungsgemäßen Kartenlesers;
- Fign. 2a, 2b: eine Draufsicht (Fig. 2a) auf den erfindungsgemäßen Kartenleser bei abgenommenem Gehäusedeckel und eine zugehörige Leiterplatte (Fig. 2b), auf die der erfindungsgemäße Kartenleser montiert wird;
- Fig. 3: ein in Fig. 2a gezeigtes Entladungsblech; und
- Fig. 4: einen Querschnitt durch den auf die Leiterplatte montierten Kartenleser gemäß IV-IV in Fig. 2a.

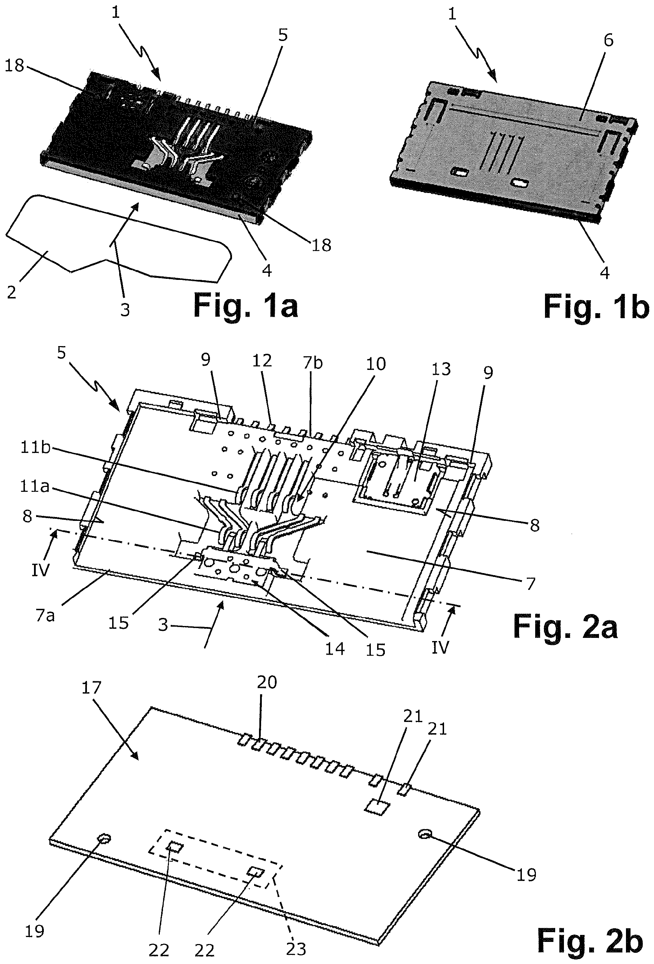

Der in **Fig. 1** gezeigte Kartenleser **1** ist ein so genannter Push/Pull-Kartenleser, bei dem eine Chipkarte **2** durch den Benutzer in Einführrichtung **3** über eine Einführöffnung **4** in den Kartenleser 1 bis in ihre Datenaustauschposition eingeführt und nach dem Datenaustausch vom Benutzer wieder aus dem Kartenleser 1 herausgezogen wird. Die Chipkarte 2 trägt zum Speichern der Daten einen Mikrochip (nicht gezeigt), dessen Kontakte als elektrische Kontaktfelder (nicht gezeigt) auf der Kartenoberfläche vorgesehen sind. Der Kartenleser 1 weist ein aus einem Gehäuseunterteil **5** und einem Gehäuseoberteil **6** zusammengesetztes Kunststoffgehäuse auf; alternativ kann das Lesergehäuse aber auch einteilig ausgeführt sein.

Wie in **Fig. 2a** gezeigt, definiert das Gehäuseunterteil 5 mit seinem Boden **7,** zwei seitlichen Führungswänden **8** und mindestens einem Endanschlag **9** einen nach oben offenen Kartenschacht, der durch das Gehäuseoberteil 6 geschossen ist. Das Gehäuseunterteil 5 weist zum Kontaktieren der elektrischen Kontaktfelder der Chipkarte 2 eine Kontaktiereinheit **10** mit acht Kontakten **11a**, **11b** auf, die als elastisch verformbare Kontaktfedern ausgebildet und in zwei in Karteneinführrichtung 3 hintereinander angeordneten, parallelen Reihen mit jeweils vier Kontakten gruppiert sind. Die beiden Kontaktreihen verlaufen jeweils quer, hier rechtwinklig, zur Karteneinführrichtung 3. Die Kontakte der näher an der Einführöffnung 4 bzw. an der Vorderkante **7a** des Bodens 7 liegenden Kontaktreihe sind als vordere Kontakte 11a und die Kontakte der ferner liegenden Kontaktreihe als hintere Kontakte 11b bezeichnet. Die Kontakte 11a, 11b ragen in die Kartenbahn hinein, so dass sie durch die eingeführte Chipkarte 2 aus der Kartenbahn ausgelenkt werden und dann auf der Kartenoberfläche gleiten, bis sie in der Datenaustauschposition die elektrischen Kontaktfelder der eingeführten Chipkarte 2 für einen Datenaustausch kontaktieren. Die acht Anschlussenden **12** der Kontakte 11a, 11b sind als Anschlussfüße an der Hinterkante **7b** des Bodens 7 herausgeführt. Das Gehäuseunterteil 5 weist im Boden 7 auch einen Kartenendschalter **13** auf, der durch die am Endanschlag 9 anliegende Chipkarte 2 geschaltet wird, wodurch der Datenaustauch ausgelöst wird.

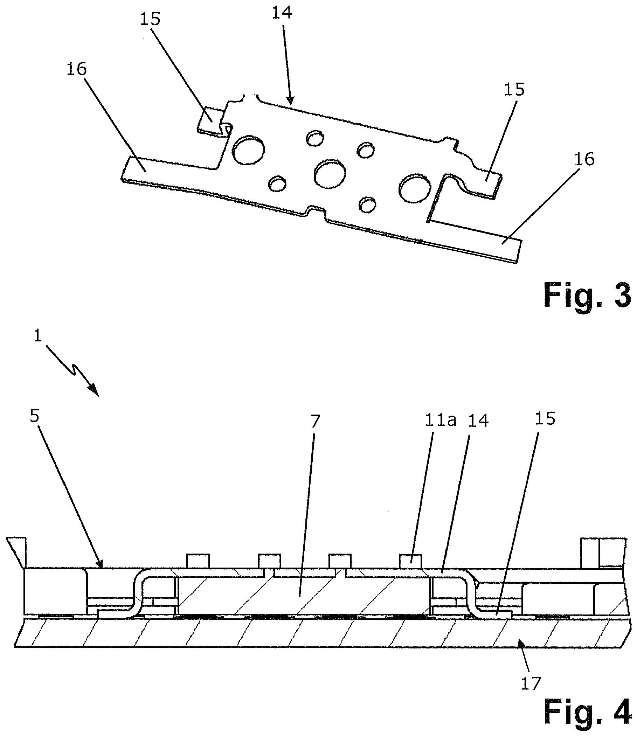

Das Gehäuseunterteil 5 umfasst weiterhin ein als Lochblech ausgeführtes Entladungsblech **14,** das zwischen der Vorderkante 7a und den vorderen Kontakten 11a angeordnet ist und sich parallel zur Kartenbahn, aber gegenüber der Oberseite des Bodens 7 zurückversetzt erstreckt. Alternativ kann das Entladungsblech 14 aber auch bündig mit der Oberseite des Bodens 7 sein. Das Entladungsblech 14 ist in Einführrichtung 3 fluchtend vor den jeweils vier Kontakten 11a, 11b der beiden Kontaktreihen angeordnet und weist, wie in **Fig. 3** gezeigt, beidseitig jeweils einen abgewinkelten Anschlussfuß **15** und eine seitlich abstehende Lasche **16** auf.

Die Kontaktiereinheit 10 mit ihren Kontakten 11a, 11b, der Kartenendschalter 13 und das Entladungsblech 14 werden beim Kunststoffspritzen des Gehäuseunterteils 5 als Einlegeteile mit Kunststoff umspritzt. Dadurch ist das Entladungsblech 14 an seiner der Kartenbahn abgewandten Unterseite - bis auf die zwei Anschlussfüße 15 - vollständig mit Kunststoff abgedeckt und über seine mit Kunststoff umspritzten Laschen 16 und seine mit Kunststoff ausgefüllten Löcher im Boden 7 verankert. Die der Kartenbahn zugewandte Innenseite des Entladungsblechs 14 ist randseitig mit Kunststoff umspritzt, aber in dem fluchtend vor den Kontakten 11a, 11b liegenden Blechbereich nicht von Kunststoff bedeckt.

Das Gehäuseunterteil 5 wird auf eine in **Fig. 2b** gezeigte Leiterplatte **17** aufgesetzt, wobei Zapfen **18** (Fig. 1a) auf der Unterseite des Gehäuseunterteils 5 in Löcher **19** der Leiterplatte 17 eingreifen. Die Anschlussfüße 12 der Kontakte 11a, 11b, die nicht gezeigten Anschlussfüße des Kartenendschalters 13 und die Anschlussfüße 15 des Entladungsblechs 14 werden mit entsprechenden Lötpads **20, 21, 22** der Leiterplatte 17 durch Reflowlöten verbunden. Durch das auf der Leiterplatte 17 angelötete Entladungsblech 14 (**Fig. 4**) ist der Kartenleser 1 nunmehr auch im Bereich der Einführöffnung 4 an der Leiterplatte 17 befestigt und gegen Anheben gesichert. Im Betrieb des Kartenlesers 1 ist das Entladungsblech 14 über die Lötpads 22 an ein Referenzpotential (z.B. Masse) angeschlossen und bildet gleichzeitig einen Abhebeschalter (Anti Removal Switch) im Stromkreis einer Überwachungselektronik **23.** Die Überwachungselektronik 23 kann, wie in Fig. 2 gezeigt, auf der Leiterplatte 17 selbst angeordnet sein oder eine externe Überwachungselektronik sein.

Beim Einführen der Chipkarte 2 in den Kartenleser 1 wird, noch bevor die Kontaktfelder der Chipkarte 2 von den Kontakten 11a, 11b der Kontaktiereinheit 10 kontaktiert werden, die Kartenseite samt ihren Kontaktfeldern am Entladungsblech 14 vorbeigeführt, und zwar entweder berührungslos, wenn das Entladungsblech 14 gegenüber der Oberseite des Bodens 7 zurückversetzt ist, oder darauf gleitend, wenn das Entladungsblech 14 gegenüber der Oberseite des Bodens 7 bündig bzw. nicht zurückversetzt ist. Über das Entladungsblech 14 kann so Spannung von einer elektrostatisch aufgeladenen Chipkarte 2 abfließen, bevor diese komplett in die Kontaktiereinheit 10 eingeführt und von den Kontakten 11a, 11b der Kontaktiereinheit 10 kontaktiert wird. Auf diese Weise wird eine Zerstörung der Elektronik der Kontaktiereinheit 10 oder der Chipkarte 2 selbst durch elektrostatische Aufladung sicher verhindert.

Wird zu Manipulationszwecken der Kartenleser 1 bzw. das Gehäuseunterteil 5 von der Leiterplatte 17 angehoben oder gelöst, um z.B. gegen einen manipulierten Kartenleser ausgetauscht zu werden, muss zuvor das Entladungsblech 14 von den Lötpads 22 abgelötet werden. Dadurch wird der Stromkreis der Überwachungselektronik 23 unterbrochen, also der Abhebeschalter geöffnet, was von der Überwachungselektronik 23 detektiert wird, die dann keinen Lesevorgang mehr zulässt bzw. die Kontaktiereinheit 10 außer Funktion setzt. Das Entladungsblech 14 kann zwar durch Kurzschließen oder Überbrücken angegriffen werden, aber dies ist auf jeden Fall mit einem größeren Aufwand verbunden, so dass der Kartenleser 1 bei der PCI (Payment Card Industry)-Zulassung eine größere Punktzahl erhält.

## Patentansprüche

1. Kartenleser (1) aufweisend:
ein Kunststoffgehäuse (5, 6) mit einem Boden (7),
eine im Boden (7) angeordnete, zumindest teilweise mit Kunststoff umspritzte Kontaktiereinheit (10) zum Datenaustausch mit einer in den Kartenleser (1) eingeführten Chipkarte (2), wobei die Kontaktiereinheit (10) in die Kartenbahn hineinragende Kontakte (11a, 11b) zum Kontaktieren von elektrischen Kontaktfeldern der Chipkarte (2) aufweist, und
ein der Kontaktiereinheit (10) auf der gleichen Seite wie die Kontakte (11a, 11b) in Karteneinführrichtung (3) vorgeordnetes Entladungsblech (14) mit zwei Anschlussfüßen (15) zum Auflöten auf eine Leiterplatte (17),
**dadurch gekennzeichnet,**
**dass** das Entladungsblech (14) im Boden (7) angeordnet und zumindest teilweise mit Kunststoff umspritzt ist.

2. Kartenleser nach Anspruch 1, **dadurch gekennzeichnet, dass** sich das Entladungsblech (14) parallel zur Kartenbahn und quer zur Karteneinführrichtung (3) erstreckt.

3. Kartenleser nach Anspruch 1 oder 2, **dadurch gekennzeichnet, dass** das Entladungsblech (14) gegenüber der Oberseite des Bodens (7) zurückversetzt ist.

4. Kartenleser nach Anspruch 1 oder 2, **dadurch gekennzeichnet, dass** das Entladungsblech (14) bündig mit der Oberseite des Bodens (7) ist.

5. Kartenleser nach einem der vorhergehenden Ansprüche, **dadurch gekennzeichnet, dass** das Entladungsblech (14) auf seiner der Kartenbahn zugewandten Seite zumindest in dem vor den Kontakten (11a, 11b) liegenden Bereich frei von Kunststoff ist.

6. Kartenleser nach einem der vorhergehenden Ansprüche, **dadurch gekennzeichnet, dass** das Entladungsblech (14) mindestens eine seitlich abstehende Lasche (16) aufweist, die vollständig mit Kunststoff umspritzt ist.

7. Kartenleser nach einem der vorhergehenden Ansprüche, **dadurch gekennzeichnet, dass** das Entladungsblech (14) als ein Lochblech ausgeführt ist.

8. Kartenleser nach einem der vorhergehenden Ansprüche, **dadurch gekennzeichnet, dass** der Kartenleser (1) auf einer Leiterplatte (17) montiert ist, wobei der Boden (7) des Kartenlesergehäuses (5, 6) der Leiterplatte (17) zugewandt ist, und dass das auf die Leiterplatte (17) aufgelötete Entladungsblech (14) in einem geschlossenen Stromkreis einer Überwachungselektronik (23) angeordnet ist.

## Claims

1. Card reader (1) comprising:
a plastic housing (5, 6) with a bottom (7),
a contacting unit (10) that is arranged in the bottom (7) and is at least partially extrusion-coated with plastic material, for data exchange with a chip card (2) that is inserted into the card reader (1), wherein the contacting unit (10) comprises contacts (11a, 11b) that project into the card path for contacting electric contact fields of the chip card (2), and
a discharge plate (14) that is arranged upstream of the contacting unit (10) on the same side as the contacts (11a, 11b) in the card insertion direction (3), with two connecting feet (15) for soldering onto a circuit board (17),
**characterized in that**
the discharge plate (14) is arranged in the bottom (7) and is at least partially extrusion-coated with plastic material.

2. Card reader according to claim 1, **characterized in that** the discharge plate (14) extends parallel to the card path and transversely to the card insertion direction (3).

3. Card reader according to claim 1 or 2, **characterized in that** the discharge plate (14) is set back with respect to the upper side of the bottom (7).

4. Card reader according to claim 1 or 2, **characterized in that** the discharge plate (14) is flush with the upper side of the bottom (7).

5. Card reader according to any one of the preceding claims, **characterized in that** the discharge plate (14) is free of plastic material on its side facing the card path at least in the area located in front of the contacts (11a, 11b).

6. Card reader according to any one of the preceding claims, **characterized in that** the discharge plate (14) has at least one laterally projecting tab (16) which is completely extrusion-coated with plastic material.

7. Card reader according to any one of the preceding claims, **characterized in that** the discharge plate (14) is designed as a perforated plate.

8. Card reader according to any one of the preceding claims, **characterized in that** the card reader (1) is mounted on a circuit board (17), wherein the bottom (7) of the card reader housing (5, 6) faces the circuit board (17), and that the discharge plate (14) that is soldered onto the circuit board (17) is arranged in a closed circuit of a monitoring electronics (23).

## Revendications

1. Lecteur de carte (1) présentant :
un boîtier en matière plastique (5, 6) ayant un fond (7),
une unité de contact (10) disposée dans le fond (7), au moins partiellement surmoulée d'une matière plastique, pour l'échange de données avec une carte à puce (2) introduite dans le lecteur de carte (1), l'unité de contact (10) présentant des contacts (11a, 1b) faisant saillie dans le trajet de carte pour venir en contact avec des champs de contact électrique de la carte à puce (2) et
une tôle de décharge (14) qui est disposée en amont de l'unité de contact (10) dans une direction d'introduction de carte (3), du même côté que les contacts (11a, 11b), et qui comporte deux pieds de connexion (15) à souder sur une carte de circuit imprimé (17),
**caractérisé en ce**
**que** la tôle de décharge (14) est disposée dans le fond (7) et est au moins partiellement surmoulée de matière plastique.

2. Lecteur de carte selon la revendication 1, **caractérisé en ce que** la tôle de décharge (14) s'étend parallèlement au trajet de carte et transversalement à la direction d'introduction de carte (3).

3. Lecteur de carte selon la revendication 1 ou 2, **caractérisé en ce que** la tôle de décharge (14) est en retrait par rapport à la face supérieure du fond (7).

4. Lecteur de carte selon la revendication 1 ou 2, **caractérisé en ce que** la tôle de décharge (14) est en alignement avec la face supérieure du fond (7).

5. Lecteur de carte selon l'une des revendications précédentes, **caractérisé en ce que** la tôle de décharge (14) est exempte de matière plastique sur sa face tournée vers le trajet de carte au moins dans la zone située devant les contacts (11a, 11b).

6. Lecteur de carte selon l'une des revendications précédentes, **caractérisé en ce que** la tôle de décharge (14) présente au moins une languette (16) faisant saillie latéralement qui est complètement surmoulée de matière plastique.

7. Lecteur de carte selon l'une des revendications précédentes, **caractérisé en ce que** la tôle de décharge (14) est réalisée sous la forme d'une tôle perforée.

8. Lecteur de carte selon l'une des revendications précédentes, **caractérisé en ce que** le lecteur de carte (1) est monté sur une carte de circuit imprimé (17), le fond (7) du boîtier de lecteur de carte (5, 6) étant tourné vers la carte de circuit imprimé (17), et que la tôle de décharge (14) soudée sur la carte de circuit imprimé (17) est disposée dans un circuit fermé d'une électronique de surveillance (23).
